# FASCICULE DE BREVET EUROPEEN

(11) **EP 3 490 823 B1**
(45) Date de publication et mention de la délivrance du brevet: **14.10.2020**
(21) Numéro de dépôt: 17745425.3
(22) Date de dépôt: 05.07.2017
(51) Int. Cl.: B60F 3/00, B62D 55/108

(54) **VEHICULE AMPHIBIE MONTE SUR CHENILLES**
AUF RAUPENKETTEN MONTIERTES AMPHIBIENFAHRZEUG
AMPHIBIOUS VEHICLE MOUNTED ON CATERPILLAR TRACKS

(30) Priorité: 28.07.2016 FR 1657325
(43) Date de publication de la demande: 05.06.2019
(73) Titulaire: IGUANA YACHTS, 50290 Brehal (FR)
(72) Inventeur: BRUGIDOU, Antoine, 78100 St Germain en Laye (FR); MIRIEU DE LABARRE, Florent, 14000 Caen (FR); HUPPERT, Steve, 35800 Dinard (FR); LEPARFAIT, Eric, 14610 Fontaine-Henry (FR)
(74) Mandataire: Cabinet HERRBURGER
(86) Numéro de dépôt international: PCT/FR2017/051826
(87) Numéro de publication internationale: WO 2018/020093

(56) Documents cités:
- EP-A1- 2 570 694
- WO-A1-2013/160605
- CA-A- 870 498
- GB-A- 415 829

## Description

La présente invention a pour objet un véhicule amphibie monté sur chenilles.

Les spécialistes ont déjà proposé différents types de véhicules amphibies qui présentent l'avantage de pouvoir se déplacer sur l'eau et sur terre.

Un véhicule amphibie est à titre d'exemple décrit dans le document WO 2013/160605 A1.

Ce véhicule amphibie comprend une coque d'axe longitudinal ainsi que des organes de propulsion aquatique motorisés et des organes de propulsion terrestre motorisés.

Ces organes de propulsion terrestre comportent deux paires de bras d'actionnement latéraux respectivement articulés d'une part sur la coque de part et d'autre de celle-ci à une première de leurs extrémités ou extrémité supérieure et d'autre part, sur un longeron reliant les deux bras de chaque paire à leur seconde extrémité ou extrémité inférieure de façon à définir un châssis articulé rigide portant un train de chenille.

Il est à noter que dans le cadre de cette description, les termes « inférieur », « supérieur »... se rapportent au véhicule amphibie considéré dans sa position de déplacement normal sur mer ou sur terre.

Dans un tel véhicule, chacun des trains de chenille est équipé d'une série de galets de roulement transversaux situés les uns derrière les autres parallèlement à l'axe longitudinal de la coque et munis chacun de deux roues montées sur roulements autour d'un axe de rotation perpendiculaire à l'axe longitudinal de la coque.

Chaque châssis rigide est mobile entre une position repliée ou position de navigation dans laquelle il est logé dans une cavité latérale de la coque et une position déployée ou position de transport terrestre dans laquelle le véhicule amphibie repose sur les trains de chenille.

Un tel véhicule présente de multiples avantages dans la mesure où les organes de propulsion terrestre sont rétractés en position de navigation et ne nuisent donc pas aux caractéristiques hydrodynamiques de la coque et où les trains de chenille permettent d'obtenir une propulsion terrestre performante sur tous les sols.

Toutefois, dans un tel véhicule, les trains de chenille et les châssis constituent des ensembles rigides non suspendus, ce qui nuit dans une large mesure au confort.

En effet, les galets transversaux sont directement fixés sur le châssis aux extrémités respectives de l'axe de rotation et les roues de ces galets sont liées solidairement et tournent autour de l'axe de rotation par l'intermédiaire de roulements à rouleaux coniques et de roulements à contact oblique.

Pour remédier à ces inconvénients, les spécialistes ont envisagé de relier deux galets voisins par une lame élastique en acier similaire aux lames de suspension équipant les véhicules utilitaires et de fixer cette lame aux axes de rotation à ses extrémités respectives et au châssis à sa partie centrale.

Une telle configuration s'est toutefois révélée inutilisable dans la pratique du fait de sa trop grande complexité et de l'insuffisance des performances mécaniques pouvant ainsi être obtenues.

Pour améliorer ces performances, il a également été envisagé de remplacer les lames en acier par des lames en résine époxy renforcée par des fibres de verre ; cette tentative n'a pas été elle non plus couronnée de succès en raison du caractère cassant de telles lames.

La présente invention a pour objet de proposer un véhicule amphibie monté sur chenilles du type susmentionné de nature à remédier à ces inconvénients.

Selon l'invention, chaque train de chenille du véhicule est équipé d'un nombre pair de galets de façon à définir un ensemble de paires de galets voisins et les galets de chaque paire sont reliés au châssis par des moyens de suspension comportant chacun un jeu d'au moins deux lames élastiques courbes en une résine thermodurcissable, notamment une résine époxy renforcée par des fibres, notamment par des fibres de verre, superposées, à savoir une lame supérieure et une lame inférieure.

La lame supérieure et la lame inférieure de chacun des jeux de lames sont liées entre elles et recouvertes par une couche d'élastomère, notamment de polyuréthane.

L'adhérence de l'élastomère sur les lames est obtenue par une opération de surmoulage.

Un tel jeu de lames est fixé d'une part aux axes des galets à ses extrémités respectives et d'autre part, au châssis à sa partie centrale.

Selon une caractéristique particulièrement avantageuse de l'invention, la lame inférieure de chaque jeu de lames est plus longue et moins raide que la lame supérieure de ce jeu et est fixée aux axes des galets à ses extrémités respectives par l'intermédiaire d'une contreplaque.

Les ensembles lame inférieure/axe de rotation des galets et contreplaques sont positionnés et maintenus par des vis traversant cet ensemble.

Selon une autre caractéristique particulièrement avantageuse de l'invention, le rayon de courbure de la lame inférieure d'un jeu de lames est inférieur au rayon de courbure de la lame supérieure de ce jeu.

Une telle configuration s'est révélée satisfaisante tant au niveau des performances mécaniques que du confort pour les utilisateurs.

Celle-ci se distingue en particulier par des amplitudes de flexion avant rupture surprenantes en réponse à une charge du fait d'une raideur non linéaire.

Plus précisément, en présence d'une contrainte verticale appliquée au milieu du jeu de lames, la fibre neutre est située au centre de ce jeu et par suite la lame supérieure plus raide est sollicitée en compression alors que la lame inférieure, plus souple, est sollicitée en extension.

Or, il est connu qu'une lame en une résine thermodurcissable renforcée par des fibres résiste moins en compression qu'en extension, de sorte que sous l'action d'une telle contrainte, la lame supérieure cassera avant la lame inférieure, ce d'autant plus qu'elle est plus rigide.

Cette situation est toutefois « tempérée » par la présence de l'élastomère situé entre les deux lames, dont la dureté shore et l'épaisseur sont adaptées pour maintenir la liaison des lames en présence d'efforts longitudinaux et définir la raideur globale de l'ensemble et parallèlement pour permettre un glissement longitudinal des deux lames l'une par rapport à l'autre.

En effet, lors de l'application d'une charge à partir du châssis, ou d'une charge sur un galet, la lame inférieure plus longue et plus souple fléchit en premier lieu par réaction, ce en fonction de cette charge.

Avec l'augmentation de la charge, l'élastomère situé entre les deux lames se comprime progressivement, et seule la lame inférieure et l'élastomère du fait de sa compression, apportent de la raideur alors que la lame supérieure plus rigide ne subit tout d'abord pas ou peu de déformation.

Ce n'est que lorsque l'élastomère s'est comprimé au maximum du fait de l'augmentation de la charge que la déformation de la lame inférieure entraîne progressivement une déformation de la lame supérieure, de sorte que la raideur de la lame supérieure s'ajoute à celle de la lame inférieure.

La configuration particulière du jeu de lames permet ainsi de créer un effet retard de nature à éviter que la lame supérieure ne casse trop rapidement, et par suite d'obtenir une raideur et une flèche importantes avec un ensemble très compact.

Cet avantage est amplifié par la configuration particulière des galets qui sont constitués chacun par un ensemble étanche comprenant un axe de rotation conformé pour recevoir la contreplaque permettant la fixation du jeu de lames, deux roues indépendantes et deux roulements constitués chacun par deux rangées de billes à contact oblique acceptant les efforts axiaux et radiaux qui sont directement insérées dans chacune des roues.

Cet ensemble très compact permet de recevoir des charges mécaniques axiales et radiales très élevées et compatibles avec les charges s'exerçant sur le jeu de lames.

Selon une autre caractéristique de l'invention, chaque jeu de lames est fixé au châssis à sa partie centrale au moyen de vis de fixation par l'intermédiaire d'un étrier essentiellement en forme de U dont la branche médiane s'applique sur sa face supérieure.

Un tel étrier de fixation coopère avantageusement avec une bride de serrage s'appliquant sur la face inférieure de chaque jeu de lames, de sorte que ce jeu de lames soit pris en sandwich et bloqué entre cette bride de serrage et l'étrier de fixation à sa partie centrale.

Selon une autre caractéristique de l'invention, la lame supérieure et le cas échéant la lame inférieure de chaque jeu de lames est(sont) munie(s) sur sa(leur) face externe d'une saillie transversale médiane ayant notamment une section de forme triangulaire et ayant pour fonction de permettre d'éviter un déplacement longitudinal du jeu de lames par rapport au châssis.

A cet effet, les étriers de fixation et le cas échéant les brides de serrage comportent une cavité correspondant aux saillies transversales des jeux de lames de façon à recevoir ces saillies transversales et donc à empêcher le déplacement longitudinal des jeux de lames par rapport au châssis.

Les caractéristiques du véhicule amphibie qui fait l'objet de l'invention seront décrites plus en détail en se référant aux dessins non limitatifs annexés dans lesquels :
- la figure 1 est une vue en perspective schématique d'un train de chenille dans lequel la chenille a été enlevée,
- la figure 2 est une vue de face d'un tel train de chenille complet,
- la figure 3 est une vue en coupe d'une paire de galets reliés par un jeu de lames,
- les figures 4 et 5 sont des vues en perspective sous des angles différents de la paire de galets représentée sur la figure 3,
- la figure 6 est une vue en perspective d'un jeu de lames,
- la figure 7 est une vue en coupe d'un galet.

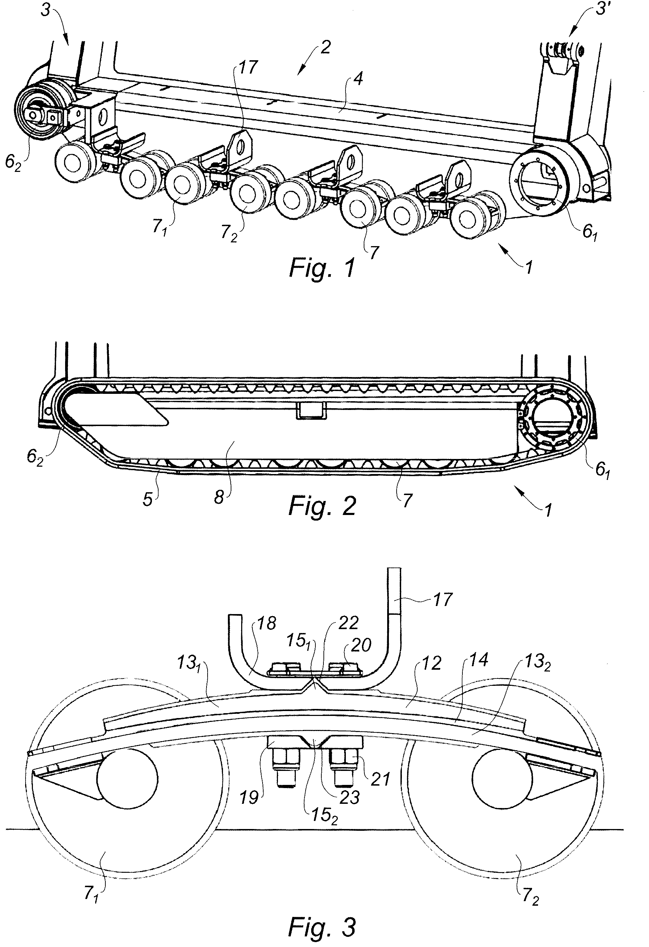

Selon les figures 1 et 2, le train de chenille 1 est monté sur un châssis articulé rigide 2 comportant deux bras articulés 3, 3' de part et d'autre d'un longeron 4 reliant ces bras 3, 3'.

Le train de chenille 1 comporte une chenille rotative 5 entraînée en rotation par un barbotin 6₁ et passant sur un rouleau de guidage et de tension 6₂ ainsi qu'une série de galets de roulement transversaux 7 situés les uns derrière les autres dans le sens de déplacement du train de chenille.

Selon la figure 2, un enjoliveur 8 soudé sur le longeron 4 masque les galets transversaux 7.

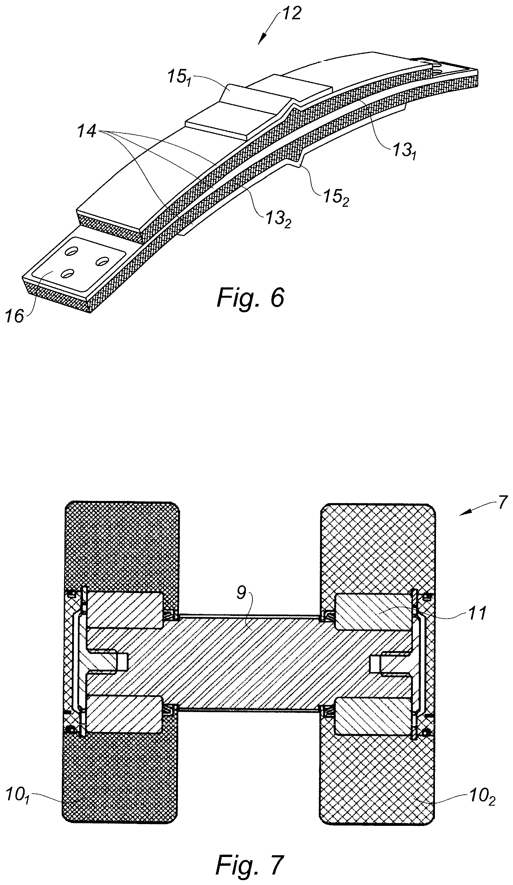

Selon la figure 7, chacun des galets transversaux 7 comporte un axe de rotation 9 autour duquel sont montées deux roues 10i, 10₂ par l'intermédiaire de roulements 11 constitués chacun par deux rangées de billes à contact oblique et qui sont respectivement insérés dans chacune des roues 10₁, 10₂.

Selon la figure 1, chaque train de chenille 1 est équipé de huit galets de roulement définissant quatre paires de galets 7₁, 7₂ voisins.

Selon les figures 3, 4 et 5, les galets 7₁, 7₂ de chaque paire sont reliés au châssis 2 par l'intermédiaire de moyens de suspension principalement constitués chacun par un jeu de lames élastiques 12 fixé aux axes 9 des galets 7₁, 7₂ à ses extrémités et au châssis 2 à sa partie centrale, d'une façon qui sera décrite plus en détail dans la suite de cet exposé.

Selon la figure 6, chaque jeu de lames élastiques est constitué par deux lames élastiques courbes en une résine époxy renforcée par des fibres de verre superposées, à savoir une lame élastique supérieure 13₁ et une lame élastique inférieure 13₂.

Ces deux lames élastiques supérieure 13₁ et inférieure 13₂ sont liées entre elles et recouvertes par une couche de polyuréthane 14.

Selon la figure 6, dans chacun des jeux de lames élastiques 12, la lame inférieure 13₂ est plus longue et moins raide que la lame supérieure 13₁ et a un rayon de courbure inférieur au rayon de courbure de cette lame supérieure 13₁ de sorte que l'épaisseur de la couche de polyuréthane insérée entre ces lames 13₁, 13₂ soit plus grande au niveau des extrémités du jeu de lames élastiques qu'à la partie centrale de celui-ci.

Au niveau de cette partie centrale, la lame supérieure 13₁ et la lame inférieure 13₂ comportent sur leur face externe respective, une saillie transversale 15₁, 15₂ ayant une section de forme triangulaire permettant d'empêcher tout déplacement longitudinal du jeu de lames élastiques 12 par rapport au châssis 2.

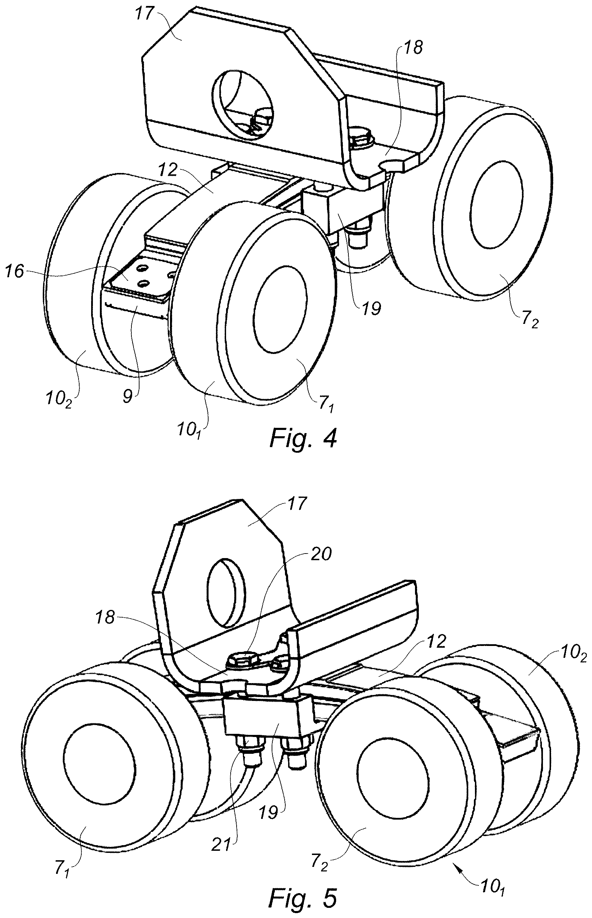

Selon les figures 4 et 6, la lame inférieure 13₂ est équipée au niveau de chacune de ses extrémités d'une contreplaque 16 permettant la fixation du jeu de lames élastiques 12 sur les axes 9 des galets 7₁, 7₂ d'une paire de galets 7 à ses extrémités respectives au moyen de vis non représentées sur les figures.

Selon les figures 1, 3, 4 et 5, le jeu de lames élastiques 12 reliant les galets 7₁, 7₂ d'une paire de galets est fixé au châssis 2 à sa partie médiane par l'intermédiaire d'un étrier essentiellement en forme de U 17 dont la branche médiane 18 s'applique sur la face supérieure du jeu de lames élastiques 12 comme on peut le constater sur les figures 3, 4 et 5.

Selon les figures 4 et 5, l'étrier de fixation 17 coopère avec une bride de serrage 19 s'appliquant sur la face inférieure du jeu de lames élastiques 12 de sorte que celui-ci soit pris en sandwich entre cette bride de serrage 19 et l'étrier de fixation 18 au niveau de sa partie centrale.

L'ensemble ainsi constitué est bloqué de part et d'autre du jeu de lames élastiques 12 par des vis 20 et des écrous 21 qui traversent cet ensemble de part en part.

Selon la figure 3, l'étrier de fixation 17 et la bride de serrage 19 comportent une cavité transversale 22, 23 de géométrie correspondant à celle des saillies transversales 15₁, 15₂ du jeu de lames élastiques pour pouvoir recevoir ces saillies transversales de façon à empêcher tout déplacement longitudinal du jeu de lames élastiques 12 par rapport au châssis 2.

### NOMENCLATURE

- 1: Train de chenille
- 2: Châssis rigide
- 3, 3': Bras articulé
- 4: Longeron
- 5: Chenille rotative
- 6₁: Barbotin
- 6₂: Rouleau de guidage et de tension
- 7: Galets transversaux
- 7₁, 7₂: Paire de galets
- 8: Enjoliveur
- 9: Axe de rotation
- 10₁, 10₂: Roue
- 11: Roulement
- 12: Jeu de lames élastiques
- 13₁: Lame élastique supérieure
- 13₂: Lame élastique inférieure
- 14: Couche de polyuréthane
- 15₁, 15₂: Saillie transversale
- 16: Contreplaque
- 17: Etrier
- 18: Branche médiane
- 19: Bride de serrage
- 20: Vis
- 21: Ecrou
- 22, 23: Cavités transversales

## Revendications

1. Véhicule amphibie comprenant une coque d'axe longitudinal ainsi que des organes de propulsion aquatique motorisés et des organes de propulsion terrestre motorisés, ces organes de propulsion terrestre comportant deux paires de bras d'actionnement latéraux (3, 3') respectivement articulés d'une part sur la coque de part et d'autre de celle-ci à une première de leurs extrémités ou extrémité supérieure et d'autre part, sur un longeron (4) reliant les deux bras (3, 3') de chaque paire à leur seconde extrémité ou extrémité inférieure de façon à définir un châssis articulé rigide (2) portant un train de chenille (1) équipé d'une série de galets transversaux (7) situés les uns derrière les autres parallèlement à l'axe longitudinal de la coque et munis chacun de deux roues (10₁, 10₂) montées sur roulement (11) autour d'un axe de rotation (9) perpendiculaire à l'axe longitudinal de la coque, chaque châssis rigide (2) étant mobile entre une position repliée ou position de navigation dans laquelle il est logé dans une cavité latérale de la coque et une position déployée ou position de transport terrestre dans laquelle le véhicule amphibie repose sur les trains de chenille,
**caractérisé en ce que**
- chaque train de chenille (1) est équipé d'un nombre pair de galets (7) de façon à définir un ensemble de paires de galets voisins (7₁, 7₂),
- les galets (7₁, 7₂) de chaque paire sont reliés au châssis (2) par des moyens de suspension comportant un jeu (12) d'au moins deux lames élastiques courbes en une résine thermodurcissable renforcée par des fibres superposées, à savoir une lame supérieure (13₁) et une lame inférieure (13₂), fixé d'une part aux axes (9) des galets (7₁, 7₂) à ses extrémités respectives et d'autre part, au châssis (2) à sa partie centrale, et
- la lame supérieure (13₁) et la lame inférieure (13₂) de chacun des jeux de lames (12) sont liées entre elles et recouvertes par une couche d'élastomère (14).

2. Véhicule amphibie conforme à la revendication 1,
**caractérisé en ce que**
la lame inférieure (13₂) de chaque jeu de lames (12) est plus longue et moins raide que la lame supérieure (13₁) et est fixée aux axes (9) des galets (7₁, 7₂) à ses extrémités respectives par l'intermédiaire d'une contreplaque (16), les ensembles lame inférieure (13₂), axe (9) des galets (7₁, 7₂) et contreplaque (16) étant positionnés et maintenus par une liaison assurée par des vis traversant cet ensemble.

3. Véhicule amphibie conforme à l'une quelconque des revendications 1 et 2,
**caractérisé en ce que**
le rayon de courbure de la lame inférieure (13₂) est inférieur au rayon de courbure de la lame supérieure (13₁).

4. Véhicule amphibie conforme à l'une quelconque des revendications 1 à 3,
**caractérisé en ce que**
la lame supérieure (13₁) et le cas échéant la lame inférieure (13₂) de chaque jeu de lames (12) est(sont) munie(s) sur leur face externe d'une saillie transversale médiane (15₁, 15₂) ayant notamment une section de forme triangulaire.

5. Véhicule amphibie conforme à l'une quelconque des revendications 1 à 4,
**caractérisé en ce que**
chaque jeu de lames (12) est fixé au châssis (2) à sa partie centrale au moyen de vis de fixation par l'intermédiaire d'un étrier (17) essentiellement en forme de U dont la branche médiane (18) s'applique sur sa face supérieure.

6. Véhicule amphibie conforme à la revendication 5,
**caractérisé en ce que**
l'étrier de fixation (17) coopère avec une bride de serrage (19) s'appliquant sur la face inférieure de chaque jeu de lames (12) de sorte que les jeux de lames (12) soient pris en sandwich et bloqués entre cette bride de serrage (19) et l'étrier de fixation (17) à leur partie centrale.

7. Véhicule amphibie conforme à la revendication 4 et à l'une quelconque des revendications 5 et 6,
**caractérisé en ce que**
les étriers de fixation (17) et le cas échéant les brides de serrage (19) comportent une cavité transversale (22, 23) correspondant aux saillies transversales (15₁, 15₂) des jeux de lames (12) de façon à recevoir ces saillies transversales.

## Patentansprüche

1. Amphibienfahrzeug, das einen Rumpf mit einer Längsachse sowie motorisierte Wasserantriebsmittel und motorisierte Landantriebsmittel umfasst, wobei die Landantriebsmittel zwei Paare aus seitlichen Betätigungsarmen (3, 3') aufweisen, die jeweils einerseits auf beiden Seiten des Rumpfes an einem ersten ihrer Enden oder dem oberen Ende und andererseits an einem Längsträger (4) angelenkt sind, der die zwei Arme (3, 3') jedes Paares an ihrem zweiten Ende oder unterem Ende verbindet, um ein starres angelenktes Gehäuse (2) zu definieren, das ein Raupenkettenlaufwerk (1) trägt, das mit einer Reihe aus Querrollen (7) ausgestattet ist, die sich parallel hintereinander an der Längsachse des Rumpfes befinden und jeweils mit zwei Rädern (10₁, 10₂) versehen sind, die auf einem Wälzlager (11) um eine Drehachse (9) herum montiert sind, die senkrecht zu der Längsachse des Rumpfes ist, wobei jedes starre Gehäuse (2) zwischen einer zusammengeklappten Position oder Navigationsposition, in der es sich in einem seitlichen Hohlraum des Rumpfes befindet, und einer eingesetzten Position oder Landtransportposition beweglich ist, in der das Amphibienfahrzeug auf den Raupenkettenlaufwerken aufliegt,
**dadurch gekennzeichnet, dass**
- jedes Raupenkettenlaufwerk (1) mit einer geraden Anzahl an Rollen (7) ausgestattet ist, um eine Baugruppe aus Paaren aus benachbarten Rollen (7₁, 7₂) zu definieren,
- die Rollen (7₁, 7₂) jedes Paares durch Aufhängungsmittel mit dem Gehäuse (2) verbunden sind, die einen Satz (12) aus mindestens zwei elastischen gekrümmten Gleitkufen aus einem wärmehärtbaren Harz verstärkt durch übereinanderliegende Fasern umfassen, nämlich einer oberen Gleitkufe (13₁) und einer unteren Gleitkufe (13₂), befestigt einerseits an den Achsen (9) der Rollen (7₁, 7₂) an ihren jeweiligen Enden und andererseits an ihrem mittigen Teil an dem Gehäuse (2), und
- die obere Gleitkufe (13₁) und die untere Gleitkufe (13₂) von jedem der Gleitkufensätze (12) durch eine Elastomerschicht (14) miteinander verbunden und damit bedeckt sind.

2. Amphibienfahrzeug nach Anspruch 1,
**dadurch gekennzeichnet, dass**
die untere Gleitkufe (13₂) jedes Gleitkufensatzes (12) länger und weniger steil als die obere Gleitkufe (13₁) ist und an ihren jeweiligen Enden mittels einer Gegenplatte (16) an den Achsen (9) der Rollen (7₁, 7₂) befestigt ist, wobei die untere Gleitkufe (13₂), die Achse (9) der Rollen (7₁, 7₂) und die Gegenplatte (16) zusammen positioniert sind und durch eine Verbindung gehalten werden, die durch Schrauben sichergestellt wird, die diese Baugruppe durchlaufen.

3. Amphibienfahrzeug nach einem der Ansprüche 1 und 2,
**dadurch gekennzeichnet, dass**
der Krümmungsradius der unteren Gleitkufe (13₂) kleiner als der Krümmungsradius der oberen Gleitkufe (13₁) ist.

4. Amphibienfahrzeug nach einem der Ansprüche 1 bis 3,
**dadurch gekennzeichnet, dass**
die obere Gleitkufe (13₁) und gegebenenfalls die untere Gleitkufe (13₂) jedes Gleitkufensatzes (12) auf ihrer Außenfläche mit einem mittigen Quervorsprung (15₁, 15₂) versehen ist (sind), der insbesondere einen Abschnitt in einer dreieckigen Form aufweist.

5. Amphibienfahrzeug nach einem der Ansprüche 1 bis 4,
**dadurch gekennzeichnet, dass**
jeder Gleitkufensatz (12) an seinem mittigen Teil mittels Befestigungsschrauben mit Hilfe eines Bügels (17), der im Wesentlichen eine U-Form aufweist, dessen mittlerer Zweig (18) auf der oberen Fläche aufliegt, an dem Gehäuse (2) befestigt ist.

6. Amphibienfahrzeug nach Anspruch 5,
**dadurch gekennzeichnet, dass**
der Befestigungsbügel (17) mit einer Klemme (19) zusammenwirkt, die auf der unteren Fläche jedes Gleitkufensatzes (12) aufliegt, sodass die Gleitkufensätze (12) an ihrem mittigen Teil zwischen dieser Klemme (19) und dem Befestigungsbügel (17) eingeklemmt und blockiert sind.

7. Amphibienfahrzeug nach Anspruch 4 und einem der Ansprüche 5 und 6,
**dadurch gekennzeichnet, dass**
die Befestigungsbügel (17) und gegebenenfalls die Klammen (19) einen Querhohlraum (22, 23) aufweisen, der den Quervorsprüngen (15₁, 15₂) der Gleitkufensätze (12) entspricht, um diese Quervorsprünge aufzunehmen.

## Claims

1. Amphibious vehicle comprising a longitudinal axis hull as well as motorised aquatic propulsion units and motorised land propulsion units, these land propulsion units comprising two pairs of lateral actuating arms (3, 3') respectively articulated, on the one hand, on both sides of the hull at a first of their ends or their upper end, and on the other hand, on a spar (4) connecting the two arms (3, 3') of each pair to their second end or lower end, so as to define a rigid articulated chassis (2) carrying a crawler track (1), equipped with a series of transverse rollers (7), located one behind the other, parallel to the longitudinal axis of the hull, and each provided with two wheels (10₁, 10₂) mounted on a bearing (11) around an axis of rotation (9) perpendicular to the longitudinal axis of the hull, each rigid frame (2) being movable between a folded or navigation position, in which it is housed in a lateral cavity of the hull, and a deployed or land transport position, in which the amphibious vehicle rests on the crawler tracks, **characterised in that**
- each crawler track (1) is equipped with an even number of rollers (7) so as to define a set of neighbouring rollers (7₁, 7₂) pairs,
- the rollers (7₁, 7₂) of each pair are connected to the chassis (2) by suspension means comprising a set (12) of at least two curved elastic leaves made of a thermosetting resin reinforced by superimposed fibres, namely an upper leaf (13₁) and a lower leaf (13₂), fastened on the one hand to the axles (9) of the rollers (7₁, 7₂) at its respective ends and on the other hand, to the chassis (2) to its central part, and
- the upper leaf (13₁) and the lower leaf (13₂) of each of the sets of leaves (12) are linked together and covered by an elastomer layer (14).

2. Amphibious vehicle according to claim 1, **characterised in that** the lower leaf (13₂) of each set of leaves (12) is longer and less stiff than the upper leaf (13₁) and is fastened to the axles (9) of the rollers (7₁, 7₂) at its respective ends via a counterplate (16), the assemblies of lower leaf (13₂), axle (9) of the rollers (7₁, 7₂) and counterplate (16) being positioned and held by a connection provided by screws passing through this assembly.

3. Amphibious vehicle according to either claim 1 or claim 2,
**characterised in that**
the radius of curvature of the lower leaf (13₂) is less than the radius of curvature of the upper leaf (13₁).

4. Amphibious vehicle according to any one of claims 1 to 3,
**characterised in that**
the upper leaf (13₁) and, where appropriate, the lower leaf (13₂) of each set of leaves (12) is(are) provided, on its (their) outer face, with a transverse medial projection (15₁, 15₂) having, in particular, a triangular shaped section.

5. Amphibious vehicle according to any one of claims 1 to 4,
**characterised in that**
each set of leaves (12) is fastened to the chassis (2) at its central part by means of fastening screws via a bracket (17) that is substantially U-shaped, the central portion (18) of which is attached to its upper face.

6. Amphibious vehicle according to claim 5,
**characterised in that**
the fastening bracket (17) cooperates with a clamping flange (19) that is applied to the underside of each set of leaves (12) so that the sets of leaves (12) are sandwiched and locked between this clamping flange (19) and the fastening bracket (17) at their central part.

7. Amphibious vehicle according to claim 4 and any one of claim 5 or claim 6,
**characterised in that**
the fastening brackets (17) and, where appropriate, the clamping flanges (19) have a transverse cavity (22, 23) corresponding to the transverse projections (15₁, 15₂) of the sets of leaves (12), so as to receive these transverse projections.
